# EUROPEAN PATENT APPLICATION

(11) **EP 4 159 018 A1**
(43) Date of publication of application: **05.04.2023**
(21) Application number: 21209033.6
(22) Date of filing: 18.11.2021
(51) Int. Cl.: A01C 21/00, A01G 31/00, C02F 1/04, C02F 1/52, C02F 11/122, C05F 5/00, C13B 15/00, C13B 15/02

(54) **METHOD AND SYSTEM FOR CULTIVATION AND PROCESSING OF SUGAR BEETS**

(30) Priority: 30.09.2021 EP 21200233
(71) Applicant: suiteg GmbH, 50858 Köln (DE)
(72) Inventor: KLOSTERHALFEN, Wolfgang, 50170 Kerpen (DE)
(74) Representative: Loock, Jan Pieter

(57) **Abstract**

The present invention provides a method for cultivation and processing of sugar beets comprising the following steps: Providing sugar beets and/or sugar beet seedlings in a first step, supplying the sugar beets and/or sugar beet seedlings with a nutrient solution during growth in a second step, harvesting at least partially fully grown sugar beets in a third step and processing the harvested sugar beets in a sugar production plant in order to extract sugar from the sugar beets in a fourth step, wherein the nutrient solution used in the second step is at least partially obtained by recovering water in the fourth step which is recycled in the second step. The present invention also provides a corresponding system for cultivation and processing of sugar beets.

## Description

### Background

The present invention relates to a method and a system for cultivation and processing of sugar beets.

Classically, sugar beets are grown by farmers in the way of field cultivation. For this purpose, peculiar soil and proper climate are necessary for successful cultivation. The soil must contain a large supply of nutrients, be rich in humus and be able to contain lots of moisture. In addition, the classical field cultivation of sugar beets is inextricably linked to a high area requirement, in particular as sugar beets need multiannual crop rotation.

Nowadays, cultivation conditions for sugar beets significantly deteriorate due to global warming caused by the long-term heating of Earth's climate system as well as changing average weather patterns in local and regional climates related thereto. In particular, as heat waves, prolonged droughts and severe weather conditions will become more frequent. At the same time the global demand for food is increasing continuously. Furthermore, harvested sugar beets have to be transported from the fields to the sugar production plants leading to undesired CO² emissions.

One approach to solving this problem can be found in the so-called inhouse or vertical farming technologies of growing crops in vertically stacked layers arranged inside buildings, containers or the like. It incorporates controlled-environment agriculture in order to optimize plant growth and to increase crop yield coming with a smaller unit area of land requirement.

A drawback of this approach until now is that vertical farming is associated with a higher energy consumption compared to classical field cultivation due to the fact that lighting, climate control and nutrient supply must be induced completely artificially. Consequently, vertical farming can only be a solution to the afore mentioned challenges as far as overall energy balance, nutrient supply and crop yield are improved.

Another aspect is that harvested sugar beets have to be further processed in order to obtain the desired end product. Sugar beets are washed and mechanically sliced or cut into thin strips, also referred to as "cossettes". Afterwards, the strips are passed through an extractor (also referred to as diffuser) in order to extract the sugar content into a water solution, so called crude juice extraction, typically by way of countercurrent exchange. The gained crude juice extraction has to be further processed, in particular purified and crystalized in order to obtain white sugar. Obviously, suchlike processing of the sugar beets comes along with additional energy consumption and waste water production.

### Disclosure of the invention

It is an object of the present invention to provide a method and a system for cultivation and processing of sugar beets addressing at least few of the above-mentioned challenges and drawbacks.

The object of the present invention is achieved by a method for cultivation and processing of sugar beets comprising the following steps:
a. Providing sugar beets and/or sugar beet seedlings in a first step;
b. Supplying the sugar beets and/or sugar beet seedlings with a nutrient solution during growth in a second step;
c. Harvesting at least partially fully grown sugar beets in a third step;
d. Processing the harvested sugar beets in a sugar production plant in order to extract sugar from the sugar beets in a fourth step;
e. Wherein the nutrient solution used in the second step is at least partially obtained by recovering water in the fourth step which is recycled in the second step.

According to the present invention, it is, thereby, advantageously possible to reuse (waste) water arising during further processing of the sugar beets in the fourth step for irrigation of the sugar beets and sugar beet seedlings in the second step. In this way, the overall water consumption of the whole process of cultivation and processing of sugar beets can be significantly reduced. The return of the water from the sugar beet processing towards the sugar beet cultivation is preferably done by way of pipelines. But, in principle, a return by tank trucks is also conceivable.

Although the present invention is not limited to vertical farming technologies which means that the first, second and third steps can be accomplished by way of an improved classical field cultivation of sugar beets, the major advantage of the present invention is conferred in combination with vertical farming. It is thus possible to increase efficiency of further processing to such an extent that the overall energy balance and water consumption of vertical farming together with further processing becomes better compared than the energy balance and water consumption of conventional field cultivation and sugar beet processing, so that the above-mentioned general challenges and drawbacks of field cultivation can be solved. The recovering of waste water arising during further processing of the sugar plants and reuse for irrigation during cultivation of the sugar beets reduces the overall water consumption and also improves the overall energy consumption as the waste water does not need to be treated in public sewage systems. In contrast, if the cultivation of the sugar beets according to the first, second and third steps is realized by way of artificial vertical farming in closed housings like containers, those containers can be located close to the sugar production plant for further processing of the sugar beets in order to extract white sugar from them. In this way, recycling of waste water for irrigation is easy to implement due to short distances between the cultivation area and the sugar production plant. Furthermore, no further energy is required for transporting the harvested sugar beets to the sugar production plant which further improves the overall energy consumption.

In the sense of the present invention, the wording first step, second step, third step, fourth step and so on are only names for certain method steps. The numbering does not necessarily mean that the invention is restricted to a certain sequence of those method steps or that any of those method steps have to be performed like counting steps only because of the numbering. The same applies for the sub steps.

According to the present invention, it is preferred that the fourth step comprising the following sub steps:
a. Cutting the harvested sugar beets into strips in a cutting unit in a first sub step;
b. Extracting sugar content from the strips into a crude juice extraction in an extractor unit in a second sub step;
c. Purifying the crude juice extraction gained from the extractor in a juice purification unit in a third sub step;
d. Crystalizing purified juice extraction gained from the juice purification unit in a crystallization unit in a fourth sub step.

Advantageously, the above described four sub steps of the fourth step of further processing of the sugar beets allows extraction of white sugar from the harvested sugar beets. Water is recovered during at least one or more or during all of said sub steps and returned to the cultivation area of the sugar beets for irrigation of the sugar beets or their seedlings in order to reduce the overall water consumption for the production of white sugar from sowing seedlings till separation of sugar crystals.

According to the present invention, it is preferred that the strips exhausted in the second sub step of the fourth step are squeezed in a press in a fifth sub step, wherein water is recovered from the strips in the fifth sub step and at least partially recycled by suppling it to sugar beets and/or sugar beet seedlings in the second step. Preferably, water being still inside the strips after extraction of the sugar content can be recovered by pressing the strips. The recovered water is at least partly also returned back to the extractor as the water still comprises a certain content of sugar. It is conceivable that the water is completely transferred to the cultivation area for irrigation purposes as soon as the sugar content in the water falls below a certain threshold.

According to the present invention, it is preferred that the crude juice extraction is thickened in a condensation stage of the juice purification unit in the third sub step, wherein water is recovered from an exhaust steam of the condensation stage by condensation in the third sub step and at least partially recycled by suppling it to sugar beets and/or sugar beet seedlings in the second step. The condensation stage comprises preferably several stages of condensation switched in series. Initially, lime, in particular a milk of lime is added to the crude juice extraction by which non-sugar substances in the crude juice extraction are bound and in order to neutralize acids in the juice extraction. Afterwards, carbon dioxide is introduced into the mixture of crude juice extraction and milk of lime to precipitate crystalline calcium carbonate. This step is repeated several times by the several stages of condensation. The exhaust steam arisen in at least one or each of those condensation stages is preferably cooled down in order to gain water from the steam by way of condensation. For this purpose, the exhaust steam is conducted through a condenser. Finally, the lime is separated from the crude juice extraction by way of filtration. At this stage, the crude juice extraction is also referred to as thin juice. The thin juice is thickened in a heating process, preferably by a multi-stage heating process. After that, the crude juice extraction is also referred to as thick juice.

According to the present invention, it is preferred that the purified juice extraction is crystalized under heat and pressure in the crystallization unit in order to separate sugar out of the purified juice extraction in the fourth sub step, wherein water is recovered from an exhaust vapor of the crystallization unit by condensation in the fourth sub step and at least partially recycled by supplying it to sugar beets and/or sugar beet seedlings in the second step. Preferably, the fourth sub step comprises several crystallization stages switched in series in that the crude juice extraction passes successively several crystallizers. The exhaust vapor arisen in at least one or each of those crystallizers is preferably cooled down in order to gain water from the vapor by way of condensation. For this purpose, the exhaust steam is conducted through a condenser.

Preferably, a condensate is collected during crystallization in the fourth sub step, wherein water is recovered from the condensate and at least partially recycled by supplying it to sugar beets and/or sugar beet seedlings in the second step. In particular, condensate is collected in each crystallizer. The mixture of thick juice and crystal sugar is also referred to as "Magma". After crystallization, the crystal sugar is separated from the Magma by means of a centrifuge. The remaining mixture is called Molasses. It is conceivable that water is also recovered from the Molasses and at least partially recycled by supplying it to sugar beets and/or sugar beet seedlings in the second step.

According to the present invention, it is preferred that the harvested sugar beets are washed with water in a zeroth sub step of the fourth step, wherein waste water from a washing procedure is at least partially recovered in the zeroth step and at least partially recycled by suppling it to the sugar beets and/or sugar beet seedling in the second step. Preferably, the washing water can be recycled without much effort as long as the zeroth sub step is performed near the cultivated area. A further treatment of the waste water is not necessary as it contains only natural impurities from soil, roots or the like.

According to a preferred embodiment of the present invention, the recovered water is treated in a treatment unit in a fifth step prior to supplying it to the sugar beets and/or sugar beet seedling in the second step, wherein the recovered water is cleaned, enriched or diluted in the fifth step. Advantageously, the water is cleaned, preferably by filtering means, in order to remove potential pollution or contamination. It is also conceivable that the water is enriched with supplements supporting growth of the sugar beets or sugar beets seedlings when being irrigated with the enriched water.

Preferably, the first, second and third steps are performed in an artificial environment for vertical farming, in particular inside a housing, wherein the sugar beets are irradiated in the second step by artificial light sources, e.g. by light-emitting diodes, inside the housing.

Preferably, an artificial environment for vertical farming can be located closely to a sugar production plant which simplifies recovery and recycling of the water used in the sugar production plant for irrigating the sugar beets cultivated by vertical farming. In particular, the lengths of the water pipes for returning the water can be realized much shorter.

Another subject of the present invention is a system for cultivation and processing of sugar beets comprising a cultivation area for cultivation of sugar beets and a sugar production plant for processing grown sugar beets to extract sugar, wherein the system comprises a return flow of recovered water from the sugar production plant to the cultivation area.

All in connection with the method according to the present invention above mentioned statements, remarks and explanations apply similarly also for the system according to the present invention and vice versa.

In particular, the system according to the present invention makes it also advantageously possible to reuse (waste) water arising in a sugar production plant during processing of sugar beets for irrigation of the sugar beets and sugar beet seedlings by use of a return flow from the sugar production plant to the cultivation are of the sugar beets. In this way, the overall water consumption of the whole process of cultivation and processing of sugar beets can be significantly reduced. The return of the water from the sugar beet processing towards the sugar beet cultivation is preferably done by way of pipelines. But, in principle, a return by tank trucks is also conceivable.

According to a preferred embodiment of the present invention, the cultivation area comprises a housing, in which the sugar beets are artificially cultivated. In particular, the housing comprises a multitude of light sources, in particular light emitting diodes. Preferably, an artificial environment for vertical farming can be located closely to a sugar production plant which simplifies recovery and recycling of the water used in the sugar production plant for irrigating the sugar beets cultivated by vertical farming. In particular, the lengths of the water pipes for returning the water can be realized much shorter. It is conceivable that the housing comprises a multitude of cultivation containers, in which sugar beets and sugar beet seedlings are cultivated, which are preferably stacked one above the other and/or side by side. It is herewith advantageously possible to optimize the space requirement for cultivation of sugar beets.

Preferably, the cultivation area comprises a watering unit for supplying the sugar beets and/or sugar beet seedlings with recovered water provided at least partially by the return flow.

Preferably, the system comprises a treatment unit for cleaning, enriching or diluting recovered water provided by the return flow. Is is herewith advantageously possible to

Preferably, the sugar production plant comprises a cutting unit for cutting the sugar beets into strips.

Preferably, the sugar production plant comprises an extractor unit for extracting sugar content from the strips into a crude juice extraction.

Preferably, the sugar production plant comprises a press for squeezing strips which have been exhausted in the extractor unit, wherein the return flow comprises a return path for water recovered by squeezing exhausted strips in the press, wherein the return path leads from the press to the watering unit in order to at least partially recycle the recovered water.

Preferably, the sugar production plant comprises a juice purification unit with a condensation stage for thickening the crude juice extraction, wherein the return flow comprises a return path for water recovered from an exhaust steam of the condensation stage by condensation, wherein the return path leads from the juice purification unit to the watering unit in order to at least partially recycle the recovered water.

Preferably, the sugar production plant comprises a crystallization unit for crystallization of the purified juice extraction under heat and pressure in order to separate sugar out of the purified juice extraction, wherein the return flow comprises a return path for water recovered from an exhaust vapor of the crystallization unit by condensation, wherein the return path leads from the crystallization unit to the watering unit in order to at least partially recycle the recovered water.

Preferably, the sugar production plant comprises a washing unit for washing the harvested sugar beets with water, wherein the return flow comprises a return path for water recovered from the waste water of the washing unit, wherein the return path leads from the washing unit to the watering unit in order to at least partially recycle the recovered water.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### Brief description of the drawings

- Figure 1: illustrates schematically an apparatus according to an exemplary first embodiment of the present invention.
- Figure 2: illustrates schematically an apparatus according to an exemplary sec-ond embodiment of the present invention.
- Figures 3a to 3b: illustrate schematically an apparatus and a method according to an exemplary third embodiment of the present invention.
- Figures 4a to 4b: illustrate schematically an apparatus and a method according to an exemplary fourth embodiment of the present invention.
- Figure 5: illustrates schematically an apparatus according to an exemplary fifth embodiment of the present invention.
- Figure 6: illustrates schematically a plant according to an exemplary sixth embodiment of the present invention.
- Figure 7: illustrates schematically a plant and a method according to an exemplary seventh embodiment of the present invention.

### Detailed description

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

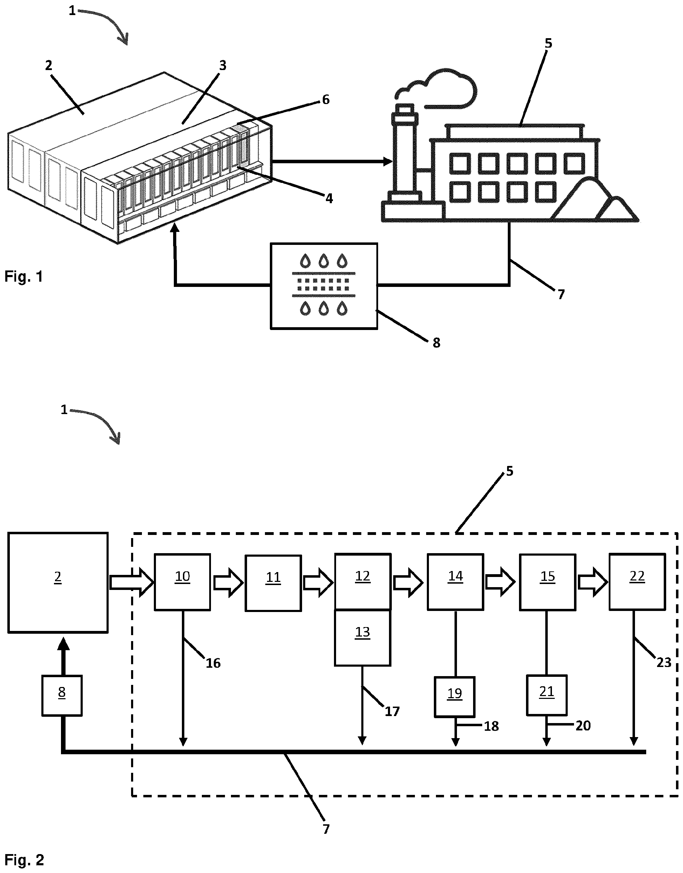

In **figure** 1, a system 1 for cultivation and processing of sugar beets according to an exemplary embodiment of the present invention is schematically illustrated.

The system 1 comprises a cultivation area 2 in which sugar beets are artificially cultivated. The cultivation area comprises a housing 3 providing an artificial environment for vertical farming of the sugar beets. For this purpose, a multitude of cultivation containers 4 are stacked one above the other and side by side inside the housing 3, wherein each cultivation container 4 comprises one or several sugar beet seedlings and/or sugar beets.

Each cultivation container 4 is provided with an artificial light source, preferably light emitting diodes (LEDs) for irradiation of the sugar beets. Preferably, the cultivation containers 4 are filled at least partially with soil for soil-based growing of sugar beets.

Furthermore, each cultivation container 4 comprises a watering unit 6 for supplying the respective sugar beets and/or sugar beet seedlings with water as nutrient solution for irrigation purposes.

The beet seedlings are sown in the cultivation containers 4 in a first step and supplied with water during grow in a second step in order to achieve grown-up sugar beets which are then harvested in a third step.

The system 1 further comprises a sugar production plant 5, preferably located nearby the cultivation area 2. The grown-up sugar beets are transported from the cultivation area 2 to the sugar production plant 5, as illustrated by arrow 9 by a belt conveyor or trucks, for instance.

The sugar production plant 5 comprises several stages and units for processing the sugar beets coming from the cultivation area 2 in order to gain white sugar from the sugar beets in a fourth step.

In several of those units of the sugar production plant 5 water can be recovered from the sugar beets or from their waste or intermediate products. The recovered water is at least partially returned to the cultivation area 2 serving as nutrient solution for irrigating the sugar beets and/or sugar beets seedlings by the watering units 6. The system 1 comprises a return flow 7 transporting the recovered water from the sugar production plant 5 to the cultivation area 2. The return flow 7 is provided by a water pipeline or tank trucks, for instance.

Preferably, the system 1 further comprises a treatment unit 8 for cleaning, enriching and/or diluting the recovered water transported to the cultivation area. The treatment unit 8 comprises filters for removing particles from the recovered water in order to reduce contamination. Preferably, the water is also enriched with supplements supporting growth of the sugar beets or sugar beets seedlings when being irrigated with the enriched water.

In **figure 2** several stages and units of the sugar production plant 5 for processing the grown-up sugar beets in order to extract white sugar from the sugar beets are schematically illustrated.

The sugar production plant 5 comprises a washing unit 10 for washing down soil and further pollution from the grown-up sugar beets newly arrived from the cultivation area 2 by use of water (also referred to as zeroth sub step of the fourth step). The waste water of the washing unit 10 is recovered and introduced into the return flow 7 (also referred to as return flow path 7) by a first flow path 16.

The sugar production plant 5 further comprises a cutting unit 11 for cutting the washed sugar beets into strips in a first sub step of the fourth step. The cutting unit 11 comprises a slicer, for instance.

The strips are transported to an extractor 12 in order to extract a crude juice extraction from the strips in a second sub step of the fourth step. In particular, the strips are diffused in the extractor by countercurrent exchange.

The diffused strips are transported to a press 13 for squeezing. By squeezing the diffused and exhausted strips in the press 13 water can be recovered which is introduced into the return flow 7, in particular by a second flow path 17.

The crude juice extraction is directed from the extractor 12 to a juice purification unit 14 of the sugar production plant 5. Here, the crude juice extraction passes several condensation stages for thickening the crude juice extraction in a third sub step of the fourth step. Initially, lime, in particular a milk of lime is added to the crude juice extraction by which non-sugar substances in the crude juice extraction are bound and in order to neutralize acids in the juice extraction. Afterwards, carbon dioxide is introduced into the mixture of crude juice extraction and milk of lime to precipitate crystalline calcium carbonate. This step is repeated several times by the several stages of condensation. The condensation stages are switched in series.

The exhaust steam of each condensation stage is guided through one or more condensation stages 19 in order to recover water from the exhaust steam. The recovered water is introduced into the return flow 7 by a third flow path 18.

Furthermore, the sugar production plant 5 comprises a crystallization unit 15 for further processing of the crude juice extraction coming from the juice purification unit 14. The crystallization unit 15 comprises several crystallization stages which are switched in series in that the crude juice extraction passes successively several crystallizers. The crude juice extraction is crystalized under heat and pressure in each crystallization stage in order to separate sugar out of the purified juice extraction in a fourth sub step of the fourth step.

The exhaust vapor of each crystallization stage is directed through a condenser 21 in order to recover water from the exhaust vapor by condensation. The recovered water is introduced into the return flow 7 by a fourth flow path 20.

The remaining mixture of thick juice and crystal sugar is also referred to as "Magma". After crystallization by aid of the crystallization unit 15, the crystal sugar is separated from the Magma by means of a centrifuge 22 of the sugar production plant 5. The remaining mixture is called Molasses. It is conceivable that water is also recovered from the Molasses and at least partially recycled by supplying it to the return flow 7, in particular by a fifth flow path 23.

### List of reference signs

- 1: System
- 2: Cultivation area
- 3: Housing
- 4: Cultivation containers
- 5: Sugar production plant
- 6: Watering unit
- 7: Return flow
- 8: Treatment unit
- 9: Arrow
- 10: Washing unit
- 11: Cutting unit
- 12: Extractor unit
- 13: Press
- 14: Juice purification unit
- 15: Crystallization unit
- 16: 1^{st} Flow path
- 17: 2^{nd} Flow path
- 18: 3^{rd} Flow path
- 19: Condensation stages
- 20: 4^{th} Flow path
- 21: Condenser
- 22: Centrifuge
- 23: 5^{th} Flow path

## Claims

1. Method for cultivation and processing of sugar beets comprising the following steps:
a. Providing sugar beets and/or sugar beet seedlings in a first step;
b. Supplying the sugar beets and/or sugar beet seedlings with a nutrient solution during growth in a second step;
c. Harvesting at least partially fully grown sugar beets in a third step;
d. Processing the harvested sugar beets in a sugar production plant in order to extract sugar from the sugar beets in a fourth step;
e. Wherein the nutrient solution used in the second step is at least partially obtained by recovering water in the fourth step which is recycled in the second step.

2. Method according to claim 1, wherein the fourth step comprising the following sub steps:
a. Cutting the harvested sugar beets into strips in a cutting unit (11) in a first sub step;
b. Extracting sugar content from the strips into a crude juice extraction in an extractor unit (12) in a second sub step;
c. Purifying the crude juice extraction gained from the extractor (12) in a juice purification unit (14) in a third sub step;
d. Crystalizing purified juice extraction gained from the juice purification unit (14) in a crystallization unit (15) in a fourth sub step.

3. Method according to claim 2, wherein strips exhausted in the second sub step of the fourth step are squeezed in a press (13) in a fifth sub step, wherein water is recovered from the strips in the fifth sub step and at least partially recycled by suppling it to sugar beets and/or sugar beet seedlings in the second step.

4. Method according to one of the claims 2 to 3, wherein the crude juice extraction is thickened in a condensation stage (19) of the juice purification unit (14) in the third sub step, wherein water is recovered from an exhaust steam of the condensation stage (19) by condensation in the third sub step and at least partially recycled by suppling it to sugar beets and/or sugar beet seedlings in the second step.

5. Method according to one of the claims 2 to 4, wherein the purified juice extraction is crystalized under heat and pressure in the crystallization unit (15) in order to separate sugar out of the purified juice extraction in the fourth sub step, wherein water is recovered from an exhaust vapor of the crystallization unit (15) by condensation in the fourth sub step and at least partially recycled by supplying it to sugar beets and/or sugar beet seedlings in the second step.

6. Method according to one of the claims 2 to 5, wherein the harvested sugar beets are washed with water in a zeroth sub step of the fourth step, wherein waste water from a washing procedure is at least partially recovered in the zeroth sub step and at least partially recycled by suppling it to the sugar beets and/or sugar beet seedling in the second step.

7. Method according to one of the preceding claims, wherein the recovered water is treated in a treatment unit (8) in a fifth step prior to supplying it to the sugar beets and/or sugar beet seedling in the second step, wherein the recovered water is cleaned, enriched or diluted in the fifth step.

8. Method according to one of the preceding claims, wherein the first, second and third steps are performed in an artificial environment for vertical farming, in particular inside a housing (3), wherein the sugar beets are irradiated in the second step by artificial light sources inside the housing (3).

9. System (1) for cultivation and processing of sugar beets comprising a cultivation area (2) for cultivation of sugar beets and a sugar production plant (5) for processing grown sugar beets to extract sugar, wherein the system (1) comprises a return flow (7) of recovered water from the sugar production plant (5) to the cultivation area (2).

10. System (1) according to claim 9, wherein the cultivation area (2) comprises a watering unit (6) for supplying the sugar beets and/or sugar beet seedlings with recovered water provided at least partially by the return flow (7).

11. System (1) according to one of the claims 9 or 10, wherein the system comprises a treatment unit (8) for cleaning, enriching or diluting recovered water provided by the return flow (7).

12. System (1) according to one of the claims 9 to 11, wherein the cultivation area (2) comprises a housing (3), in which the sugar beets are artificially cultivated.

13. System (1) according to one of the claims 9 to 12, wherein the housing (3) comprises a multitude of light sources, in particular light emitting diodes.

14. System (1) according to one of the claims 9 to 13, wherein the housing (3) comprises a multitude of cultivation containers (4), which are preferably stacked one above the other and/or side by side.

15. System (1) according to one of the claims 9 to 14, wherein the sugar production plant (5) comprises a cutting unit (11) for cutting the sugar beets into strips.

16. System (1) according to one of the claims 9 to 15, wherein the sugar production plant (5) comprises an extractor unit (12) for extracting sugar content from the strips into a crude juice extraction.

17. System (1) according to one of the claims 9 to 16, wherein the sugar production plant (5) comprises a press (13) for squeezing strips which have been exhausted in the extractor unit (12), wherein the return flow (7) comprises a return path (17) for water recovered by squeezing exhausted strips in the press (13), wherein the return path (17) leads from the press (13) to the watering unit (6) in order to at least partially recycle the recovered water.

18. System (1) according to one of the claims 9 to 17, wherein the sugar production plant (5) comprises a juice purification unit (14) with a condensation stage for thickening the crude juice extraction, wherein the return flow (7) comprises a further return path (18) for water recovered from an exhaust steam of the condensation stage by condensation, wherein the further return path (18) leads from the juice purification unit (14) to the watering unit (6) in order to at least partially recycle the recovered water.

19. System (1) according to one of the claims 9 to 18, wherein the sugar production plant (5) comprises a crystallization unit (15) for crystallization of the purified juice extraction under heat and pressure in order to separate sugar out of the purified juice extraction, wherein the return flow (7) comprises a further return path (20) for water recovered from an exhaust vapor of the crystallization unit (15) by condensation, wherein the further return path (20) leads from the crystallization unit (15) to the watering unit (6) in order to at least partially recycle the recovered water.

20. System (1) according to one of the claims 9 to 19, wherein the sugar production plant (5) comprises a washing unit (10) for washing the harvested sugar beets with water, wherein the return flow (7) comprises a return path (16) for water recovered from the waste water of the washing unit (10), wherein the return path leads from the washing unit (8) to the watering unit (6) in order to at least partially recycle the recovered water.
